# FASCICULE DE BREVET EUROPEEN

(11) **EP 0 605 335 B1**
(45) Date de publication et mention de la délivrance du brevet: **27.11.1996**
(21) Numéro de dépôt: 93420508.9
(22) Date de dépôt: 22.12.1993
(51) Int. Cl.: H02H 3/04

(54) **Déclencheur électronique comportant un dispositif de test**
Elektronischer Auslöser mit Testgerät
Electronic trip device comprising a testing device

(30) Priorité: 28.12.1992 FR 9215880
(43) Date de publication de la demande: 06.07.1994
(73) Titulaire: SCHNEIDER ELECTRIC SA, 92100 Boulogne Billancourt (FR)
(72) Inventeur: Del Vecchio, Alain, F-38050 Grenoble Cedex 09 (FR); Ferrazzi, Marc, F-38050 Grenoble Cedex 09 (FR)
(74) Mandataire: Jouvray, Marie-Andrée

(56) Documents cités:
- FR-A- 2 592 998

## Description

L'invention concerne un déclencheur électronique pour disjoncteur électrique multipolaire de protection d'un réseau électrique comportant:
- un capteur de courant par pôle fournissant un courant secondaire représentatif d'un courant parcourant un conducteur associé du réseau protégé par le disjoncteur,
- des moyens d'entrée d'un courant de test,
- un circuit de détection et de redressement, auquel sont appliqués les courants secondaires et le courant de test, fournissant des signaux représentatifs des courants parcourant les conducteurs à protéger et du courant de test,
- un ensemble électronique de traitement recevant les signaux fournis par le circuit de détection et de redressement et délivrant un ordre de déclenchement, avec ou sans retard, lorsque les courants parcourant les conducteurs à protéger, un courant homopolaire ou un courant de test dépassent des seuils prédéterminés.

Les dispositifs de test pour déclencheurs électroniques comportent généralement une prise de test munie de bornes sur lesquelles un courant de test est injecté. Ce courant simule un courant de défaut qui pourrait apparaître sur des enroulements secondaires des transformateurs ou capteurs de courant. Suivant le mode de branchement des bornes de la prise de test sur le circuit de redressement, le courant de test s'ajoute ou se combine avec les courants des capteurs afin de tester l'ensemble du déclencheur. Dans des déclencheurs de types connus comportant des fonctions de protection dites thermique ou long retard, magnétique ou court retard et homopolaire pour la protection terre, un discriminateur permet de tester la protection terre de manière indépendante. Lorsque le courant de test est injecté dans un premier sens, polarité positive sur une première borne et négative sur une seconde, le déclencheur ne tient pas compte de ce courant de test pour la protection terre et déclenche en long retard ou court retard. Si le sens du courant est inversé le déclencheur utilise le courant de test pour déterminer une valeur représentative du courant homopolaire et le déclenchement est produit par la protection terre. Les moyens de détermination de la valeur représentative du courant homopolaire et les moyens de discrimination du courant de test sont, de manière connue, intégrés dans le circuit de détection et de redressement, comme dans le brevet français FR-2.592.998, correspondant au brevet EP-235.479.

Dans les déclencheurs électroniques très intégrés, les moyens de détermination de la valeur représentative du courant homopolaire sont inclus dans l'ensemble de traitement, de manière à réduire le coût et le volume des composants. Pour les mêmes raisons les moyens de discrimination du courant de test de types connus ne peuvent plus être avantageusement implantés dans le circuit de redressement.

L'invention a pour but un déclencheur électronique comportant un dispositif de test, à circuit de détection et de redressement simplifié, et intégrant des moyens de détection de la présence d'un courant de test et des moyens de différenciation du test de la protection terre dans l'ensemble de traitement.

Selon l'invention, l'ensemble électronique de traitement comporte des moyens de détection d'un courant de test permettant de déterminer que le courant de test garde une polarité prédéterminée pendant un temps supérieur à la période du réseau électrique à protéger.

Selon un mode de réalisation de l'invention, les moyens d'entrée du courant test sont connectés au circuit de détection et de redressement de manière à fournir en sortie du circuit de détection et de redressement au moins un signal de somme représentatif de la somme du courant test et du courant fourni par un desdits capteurs ou par un capteur homopolaire.

Selon un développement du mode de réalisation, l'ensemble de traitement comporte des moyens de détermination du signe du signal de somme ou du courant test.

Dans un mode préférentiel de réalisation, l'ensemble de traitement comporte des moyens de détermination du temps pendant lequel ledit signe conserve une valeur prédéterminée, et des moyens de comparaison de ce temps à une durée prédéterminée.

Selon un développement de l'invention, l'ensemble de traitement comporte des moyens de réalisation d'une fonction de protection terre et des moyens d'inhibition de ladite fonction de protection terre.

Selon un mode particulier de réalisation, les moyens d'entrée du courant de test comportent une première borne, connectée à une sortie d'un enroulement secondaire d'un premier capteur de courant et à une première entrée du circuit de détection et de redressement, et une seconde borne connectée à une sortie d'un enroulement secondaire d'un second capteur de courant et à une seconde entrée du circuit de détection et de redressement.

Selon un autre mode de réalisation de l'invention, l'ensemble de traitement comporte des moyens de correction connectés entre le circuit de détection et de redressement, et des circuits de réalisation de fonctions de déclenchement, lesdits moyens de correction étant connectés à une sortie des moyens de détection du courant test fournissant un signal représentatif de la présence d'un courant test.

D'autres avantages et caractéristiques ressortiront plus clairement de la description qui va suivre, de modes particuliers de réalisation de l'invention, donnés à titre d'exemples non limitatifs, et représentés aux dessins annexés sur lesquels:

La figure 1 représente un schéma-bloc simplifié d'un disjoncteur dans lequel un déclencheur comportant l'invention peut être mis en oeuvre.

La figure 2 représente un schéma d'un déclencheur selon un mode de réalisation de l'invention.

Les figures 3 et 4 montrent des signaux de courant lors du test d'un déclencheur en service et hors service.

La figure 5 représente l'architecture d'un mode particulier de réalisation du circuit d'un déclencheur selon la figure 2.

La figure 6 représente l'organigramme d'un traitement selon un mode de réalisation de l'invention.

Les figures 7 et 8 illustrent les valeurs des signaux lors d'un test différencié du long retard et de la protection terre.

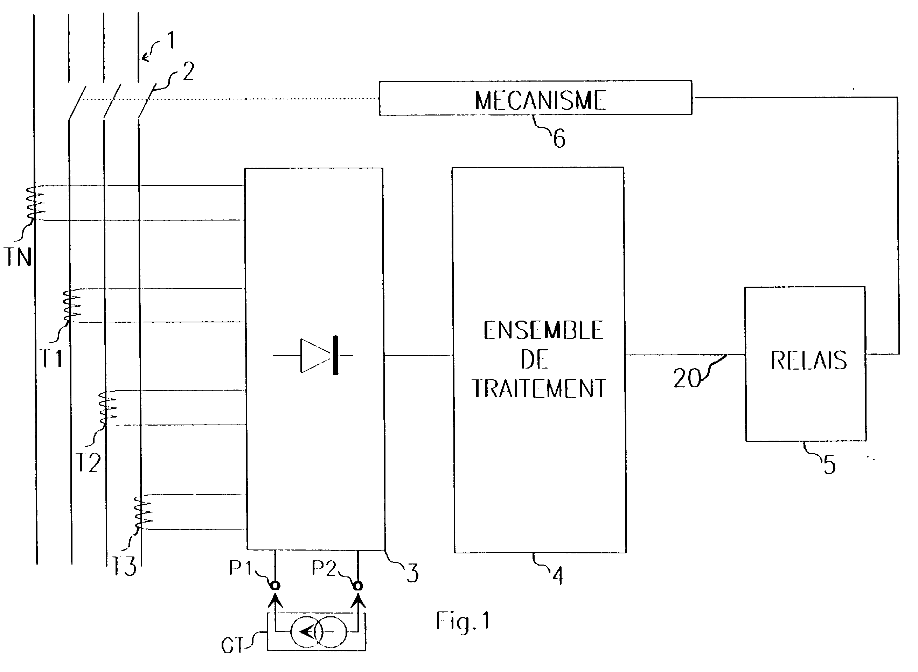

La figure 1 représente un disjoncteur de type connu. Un réseau électrique 1 à protéger est composé de conducteurs électriques, correspondant généralement aux trois phases et au neutre d'une installation. Des contacts 2 permettent d'établir ou d'interrompre le courant dans les conducteurs de phase. Sur la figure comme dans une grande partie des installations, le conducteur de neutre est distribué sans être coupé. Des transformateurs de courant T1, T2, T3, et TN associés aux différents conducteurs du réseau transforment les courants primaires de forte valeur en courants secondaires compatibles avec les déclencheurs électroniques. Un circuit de test à bornes auxiliaires P1 et P2 permet de recevoir d'un générateur de test GT, un courant de test pour contrôler le fonctionnement du déclencheur. Les courants secondaires et le courant test sont appliqués à l'entrée d'un circuit 3 de redressement et de détection des courants de phase, de neutre et de défaut terre. Ce circuit fournit des signaux représentatifs de ces courants à un ensemble électronique 4 de traitement. Un ordre de déclenchement 20 produit par l'ensemble de traitement 4 est appliqué à l'entrée d'un relais de commande 5 qui actionne un mécanisme 6 d'ouverture des contacts 2 du disjoncteur.

Dans le déclencheur électronique représenté, la valeur du courant homopolaire est déterminée dans l'ensemble de traitement et le circuit 3 de redressement et de détection ne comporte pas d'élément de discrimination entre le test de la protection terre et le test du long retard ou du court retard, en fonction du sens du courant test fourni par le générateur.

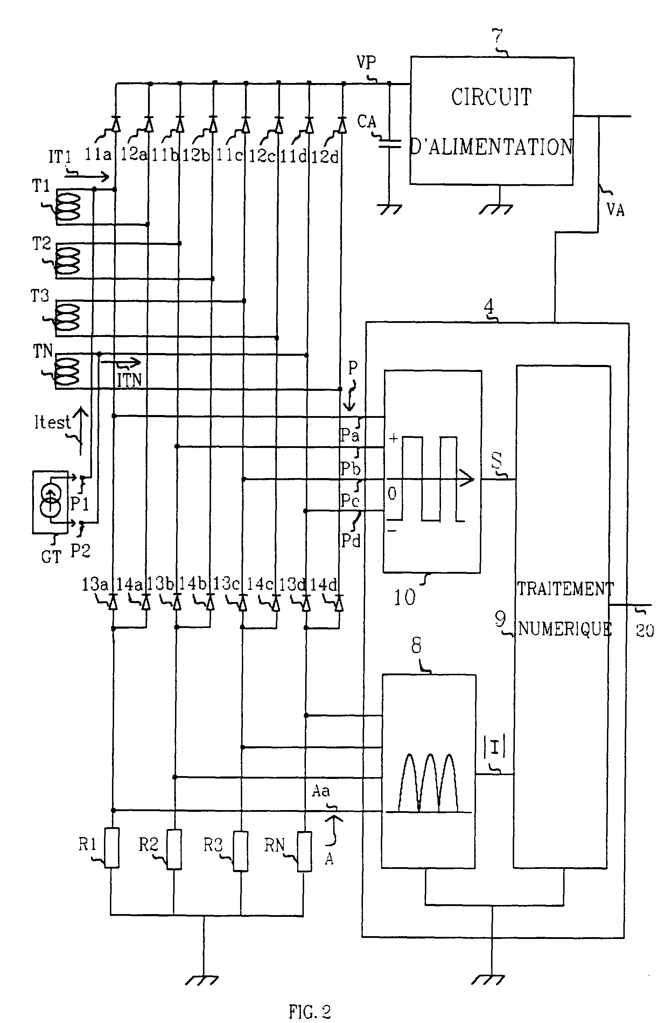

Le schéma d'un déclencheur selon un mode de réalisation de l'invention est représenté à la figure 2. Chaque enroulement secondaire des transformateurs de courant est connecté à un pont redresseur représenté par un groupe de quatre diodes. Pour chaque transformateur de courant T1, T2, T3, TN une première extrémité Pa, Pb, Pc, Pd de l'enroulement secondaire est reliée à l'anode d'une première diode associée 11a, b, c, d et à la cathode d'une seconde diode associée 13a, b, c, d, tandis que une seconde extrémité de l'enroulement secondaire de T1, T2, T3, ou TN est reliée à l'anode d'une troisième diode 12a, b, c, d et à la cathode d'une quatrième diode associée 14a, b, c, d. Les cathodes des premières et troisièmes diodes (11a, b, c, d; 12a, b, c, d) sont reliées à une ligne d'alimentation positive Vp. Les anodes des secondes et quatrièmes diodes associées à un enroulement secondaire (13a, 14a; 13b, 14b; 13c, 14c; 13d, 14d) sont connectées à une première borne d'une résistance de mesure associée (R1, R2, R3, RN), l'autre borne de chacune des résistances de mesure étant connectée à une masse de référence électrique du déclencheur. La ligne d'alimentation positive Vp charge un condensateur CA et fournit une tension d'entrée à un circuit 7 d'alimentation. Le circuit fournit une tension VA régulée pour l'alimentation du déclencheur. Les premières bornes des résistances R1, R2, R3, RN sont connectées par des conducteurs A aux entrées d'un circuit 8 de traitement des amplitudes. La sortie du circuit 8 fournit à un circuit de traitement numérique 9 des signaux redressés | I| représentatifs des valeurs absolues des courants du réseau à protéger.

La première extrémité de chaque transformateur de courant T1, T2, T3, TN est connectée par un conducteur Pa, Pb, Pc, Pd à l'entrée d'un circuit 10 de détection des signes des courants. Ce circuit 10 fournit sur une sortie S, pour chaque entrée, une première valeur si le signe du courant est positif et une seconde valeur si le signe du courant est négatif. La sortie S du circuit est connectée au circuit 9 de traitement numérique.

Dans ce mode de réalisation le circuit test comporte deux bornes auxiliaires P1 et P2. La première borne P1 est connectée à la première extrémité du transformateur T1 correspondant également à la cathode de la diode 13a, à l'anode de la diode 11a et à une entrée Pa du circuit de détection du signe 10. De la même manière, la deuxième borne P2 est connectée à la première extrémité du transformateur TN, à la cathode de la diode 13d, à l'anode de la diode 11d et à une autre entrée, Pd, du circuit de détection de signe. Avec ce type de branchement un courant de test généré entre la borne P2 et la borne P1 s'ajoute au courant secondaire du transformateur T1 et se retranche au courant du transformateur TN.

Lorsqu'un courant IT1 de polarité positive circule dans l'enroulement secondaire du transformateur T1, il passe par la diode 11a pour charger le condensateur CA et alimenter le déclencheur à travers le circuit 7. Le retour du courant se fait par la masse et la résistance de mesure R1, puis à travers la diode 14a et la seconde extrémité du secondaire du transformateur. La présence de courant positif porte la tension du conducteur Pa à une valeur supérieure à OV. Le circuit de détection des signes détecte cette tension et fournit sur sa sortie une première valeur représentative de la polarité positive de IT1. La tension mesurée aux bornes de la résistance R1, entre un conducteur Aa et la masse a une tension négative. Si le courant IT1 est de polarité négative, la seconde extrémité du secondaire du transformateur a une tension positive. Le courant passe par la diode 12a pour charger CA et alimenter le déclencheur, le retour se fait par la résistance de mesure R1 et la diode 13a. La tension de mesure R1 entre Aa et la masse est toujours négative alors que la tension en Pa devient négative et le circuit de détection des signes fournit en sortie une seconde valeur, représentative de la polarité négative de IT1. Les courants circulant dans les autres secondaires des transformateurs de courant (TN, T2, T3) et dirigés par les diodes de redressement associées produisent les mêmes effets sur le circuit 10 de détection des signes et les entrées du circuit 8 de traitement des amplitudes.

L'ensemble, comportant le transformateur de courant T1, les diodes 11a, 12a, 13a et 14a, la résistance R1, les liaisons Pa et Aa, les parties des circuits 8, 9, 10 correspondant au courant IT1, forme une voie de mesure du courant d'une première phase.

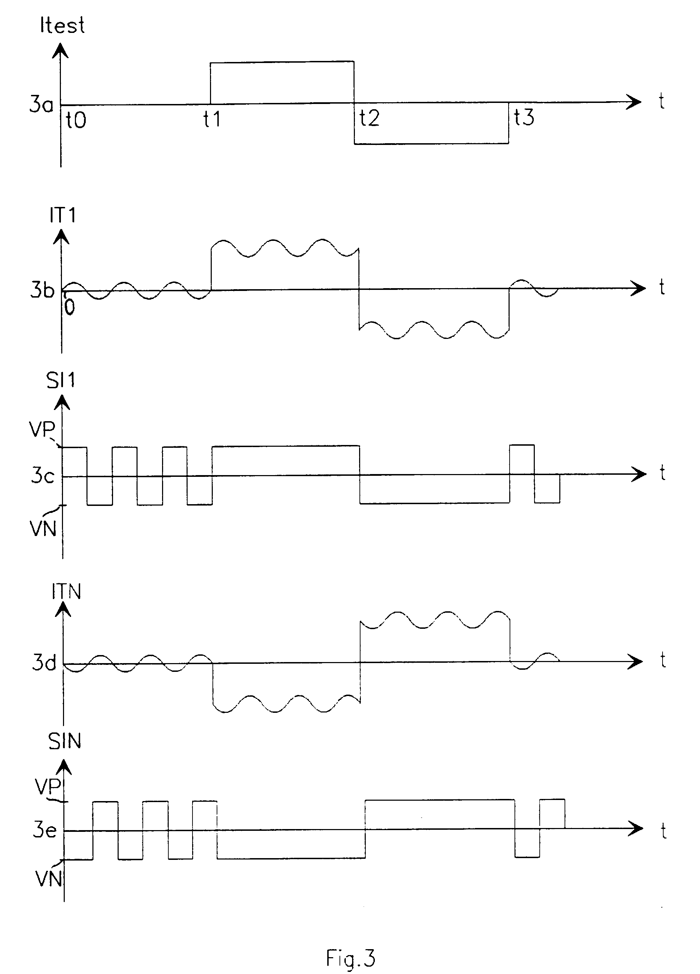

La figure 3 montre une représentation des courants et des signes lors d'un test. Le courant IT1 est la somme du courant du secondaire du transformateur T1 et du courant test. ITN représente le courant du secondaire du transformateur TN auquel se soustrait le courant de test. Des indicateurs S11 et SIN représentent les signes respectivement de IT1 et ITN. Ils peuvent par exemple, prendre une valeur positive VP si le courant est positif et une valeur négative VN si le courant est négatif ou nul. Le courant de test représenté à la figure 3a, est nul entre des instants t0 et t1, positif, circule dans le sens P2 vers P1 dans le générateur GT de signaux de test, entre les instants t1 et t2 et négatif, circule dans le sens P1 vers P2 dans le générateur, entre les instants t2 et t3. Les courants alternatifs IT1 et ITn sont respectivement représentés sur les figures 3b et 3d. Ils fournissent entre to et t1, des signaux de signes respectivement SI1 et SIN (figures 3c et 3e) dont les valeurs changent à chaque demi-alternance. Lorsque un courant de test Itest positif, de valeur supérieure à l'amplitude des courants des secondaires, est injecté entre les instants t1 et t2, IT1 reste de polarité positive et ITN de polarité négative de manière continue, et les signaux de signes SI1 et SIN gardent des valeurs fixes respectivement VP et VN. Si le courant de test est inversé entre les instants t2 et t3, IT1 est de polarité négative et SI1 est égal à VN et ITN est de polarité positive, et SIN est égal à VP.

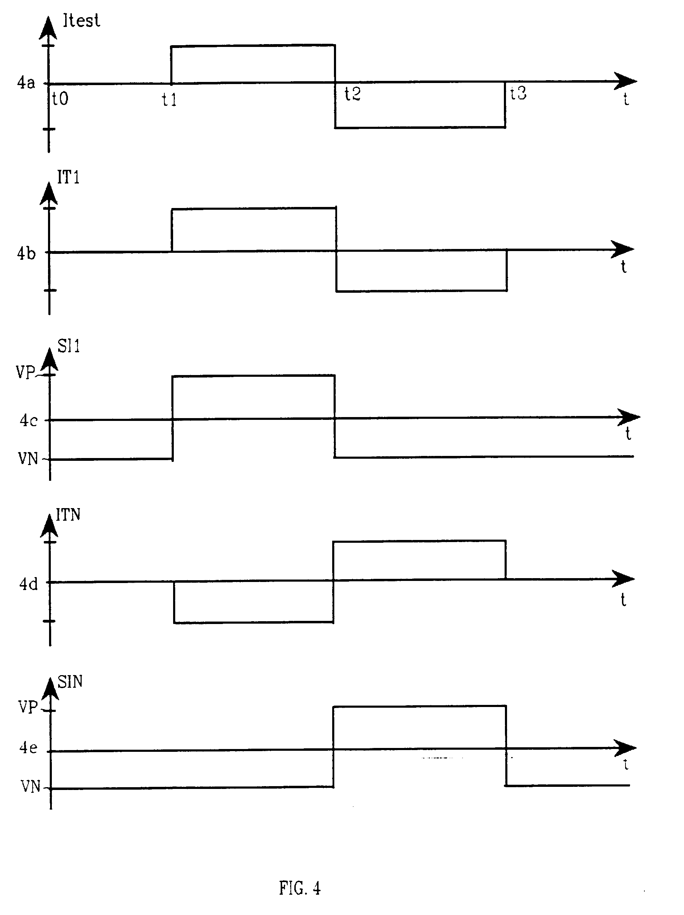

Le même type de test peut être effectué sur un disjoncteur hors service. A la figure 4, les courants des secondaires des transformateurs T1, 2, 3, N sont nuls, IT1 (figure 4b) est égal au courant de test et ITN (figure 4d) correspond au courant de test inversé. Les signaux de signes SI1 (figure 4c) et SIN (figure 4e) représentent respectivement les polarité de IT1, soit Itest, et ITN soit Itest inversé.

Selon ce mode de réalisation, la détection de la présence d'un courant test peut être effectuée par des moyens permettant de déterminer la permanence d'un signe sur l'une des entrées du circuit de traitement correspondant à une des voies de mesure recevant le courant de test. La valeur de ce signal de signe permanent permet de différencier le test en autorisant, pour une première valeur du signal du signe, le test de la protection terre et en l'inhibant pour une deuxième valeur correspondant à un signe différent. Bien que deux signaux de signes SIN et SI1 soient disponibles, un seul est en pratique utilisé pour mettre en oeuvre l'invention. Dans la description qui va suivre, le signe SIN servira à la détection du test.

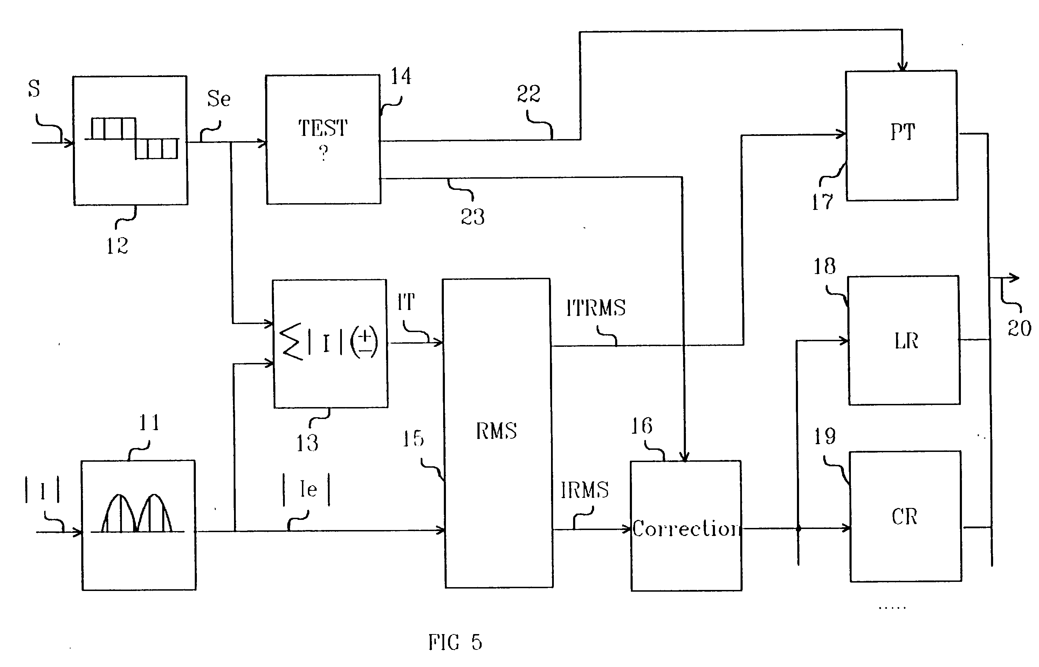

L'architecture d'un mode de réalisation du circuit de traitement 9 est représentée à la figure 5. Des circuits d'échantillonnage 11 et 12 échantillonnent respectivement les signaux représentatifs des courants redressés |I| et les signaux représentatifs des signes S desdits courants. Les échantillons des valeurs de courants Ie et des signes Se sont appliqués à l'entrée d'un circuit 13 de détermination de la valeur du courant IT de défaut terre.

Dans ce mode de réalisation le circuit 13 calcule la valeur du courant IT en faisant la somme vectorielle des valeurs des courants parcourant les conducteurs à protéger. Les valeurs des échantillons |Ie| dont le signe Se correspondant est de valeur positive sont ajoutés, et les valeurs des échantillons dont le signe Se correspondant est de valeur négative sont soustraits. Les échantillons des valeurs de courants |Ie| et la valeur du courant de protection terre peuvent être appliqués aux entrées d'un circuit 15 de calcul des valeurs efficaces, respectivement IRMS et ITRMS. Les valeurs des courants efficaces IRMS représentant les courants des TC peuvent être corrigées par un circuit de correction 16 avant d'être appliqués à des circuits 18,19 réalisant respectivement des fonctions de déclenchement long retard LR et court retard CR. La valeur du courant de protection terre IT ou ITRMS est appliquée à un circuit 17 réalisant une fonction de protection terre PT. Les circuits réalisant les fonctions de protection LR, CR, PT... fournissent, de manière connue, un signal de déclenchement 20 lorsque des seuils de courant et de temporisation prédéterminés sont dépassés.

Selon ce mode de réalisation, les signaux des signes Se ou S sont appliqués à un circuit 14 de détermination de la présence d'un courant de test. Le circuit 14 détecte la présence d'un courant de test lorsque un signal de signe, par exemple SIN, a une valeur constante pendant un temps t(SIN) supérieur à un temps tmin prédéterminé, lui-même supérieur à la période du réseau électrique à protéger. Lorsque le circuit 14 a détecté la présence d'un signal test, il détermine le signe du courant test de manière à déterminer s'il s'agit d'un test de la fonction protection terre ou d'un test des autres fonctions de déclenchement. Si l'information de la présence de courant test indique que le signe de SIN a une valeur Vp pendant un temps supérieure à tmin, il s'agit d'un test des autres fonctions de déclenchement. Alors, le circuit 14 fournit un signal d'inhibition 22 au circuit 17 réalisant la fonction terre PT. De cette manière, les signaux de courants appliqués aux circuits 17, 18, 19, ne seront pris en compte que par les circuits de déclenchement autres que le circuit 17.

Dans le cas où il s'agit d'un test de la fonction protection terre, il n'est pas indispensable d'inhiber les autres fonctions car le seuil et la temporisation de la fonction protection terre sont généralement inférieures à ceux des autres fonctions. Lorsque la présence d'un courant de test est détecté par le circuit 14, un signal 23 peut être appliqué par le circuit 14 au circuit de correction 16, de manière à permettre la modification des paramètres de correction des seuils et des temps de déclenchement.

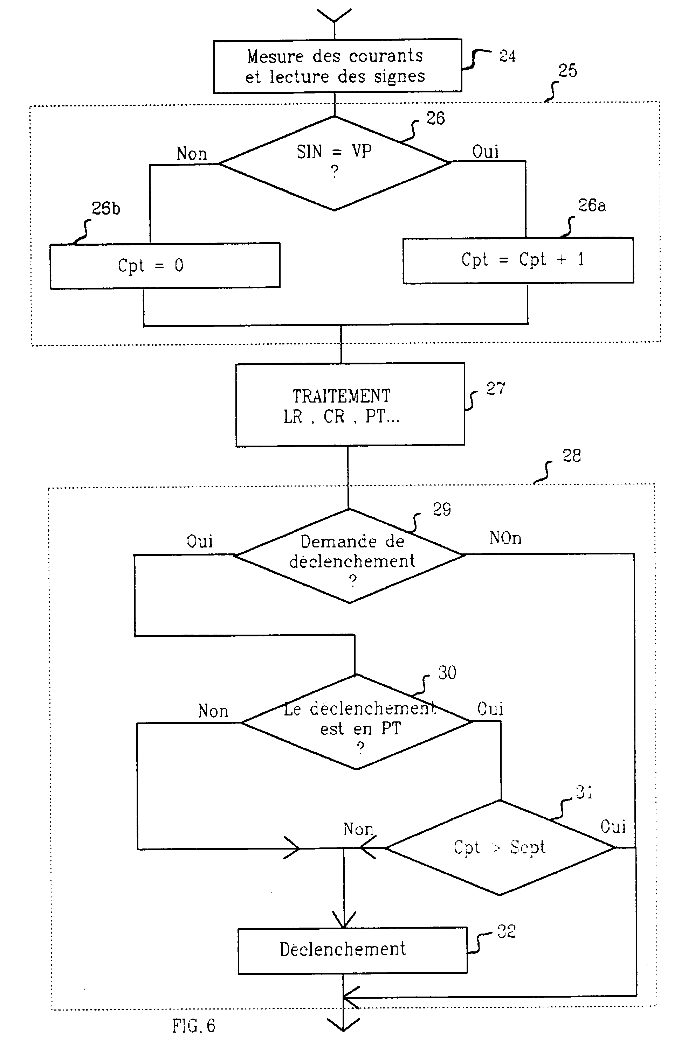

Le circuit de traitement 9 peut comporter un microprocesseur programmé de manière à réaliser les fonctions du circuit représenté à la figure 5. Un exemple d'organigramme est illustré à la figure 6. Dans une étape 24, s'effectue la mesure des courants et la lecture des signes pour le traitement des fonctions de déclenchement. La détection de la permanence d'un signe et la différenciation du type de test se font dans un module 25. Une étape de comparaison 26 permet de détecter si la valeur du signe SIN est égale à la valeur VP. Si cette égalité est vraie, un compteur Cpt est incrémenté (Cpt = Cpt + 1), dans une étape 26a, sinon ce compteur est remis à zéro dans une étape 26b. Le traitement des fonctions de déclenchement LR, CR, PT est fait dans une étape 27 et le contrôle de l'inhibition du déclenchement de la fonction protection terre est effectué par un module 28. Ce module comporte une étape 29 de détection d'une demande de déclenchement, une étape 30 de différenciation des demandes de déclenchement, une étape 31 de contrôle de l'inhibition et une étape 32 produisant un ordre de déclenchement. Lorsqu'à l'étape 29 une demande de déclenchement est détectée, l'étape 30 différencie cette demande. Si la demande ne correspond pas à un déclenchement en défaut terre, un ordre de déclenchement est directement produit par l'étape 32. Dans le cas d'une demande de déclenchement en protection terre, l'étape 31 contrôle l'inhibition en comparant la valeur du compteur Cpt à une valeur de seuil Scpt prédéterminée. Une valeur de Cpt supérieure à Scpt correspond à la permanence de la valeur du signal de signe SIN à la valeur Vp et à la présence d'un courant de test avec une inhibition de la protection terre qui évite l'étape 32 de déclenchement. Une valeur de Cpt inférieure à Scpt est représentative d'un fonctionnement sans courant de test ou avec un courant de test de la fonction protection terre.

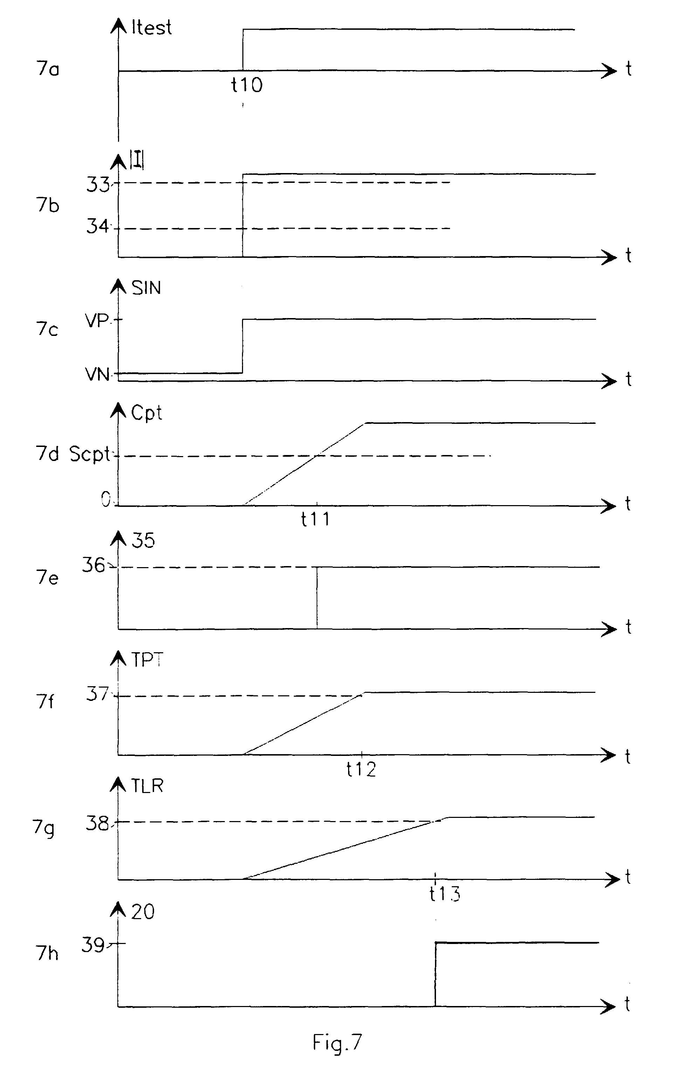

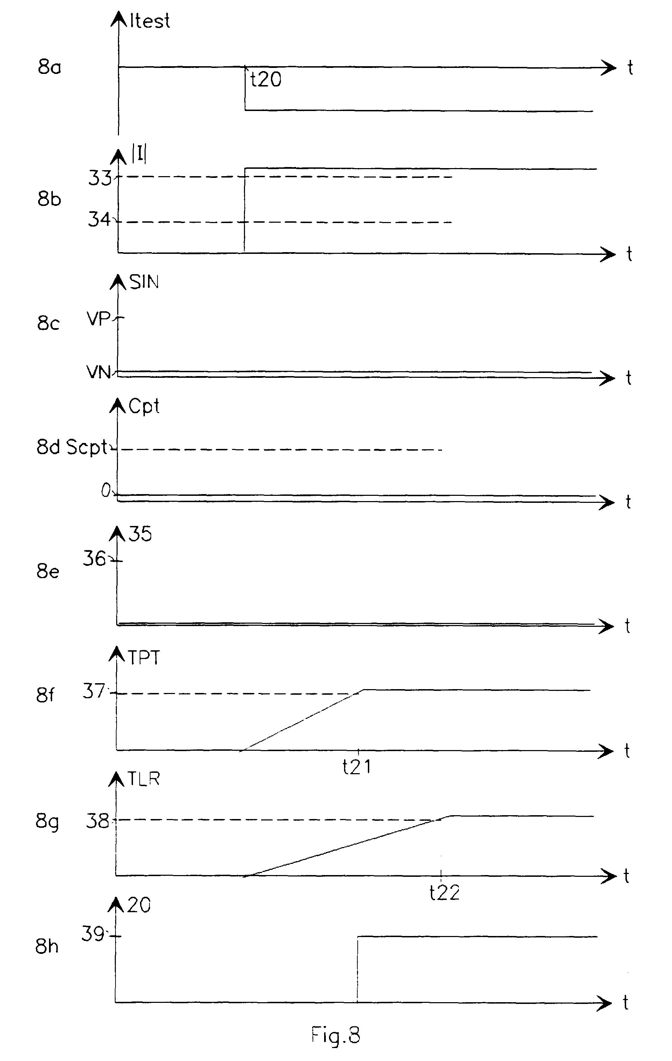

Les figures 7 et 8 illustrent les différents signaux en fonction du temps. A un instant t10, (figure 7a), un courant Itest positif est injecté sur les bornes de test. La valeur absolue de ce courant |I| (figure 7b), est supérieure à des seuils 33 prédéterminés de déclenchement des fonctions long retard ou court retard et à un seuil 34 prédéterminé de déclenchement de la fonction de protection terre. La valeur du signe SIN de la voie neutre se bloque à une valeur VP (figure 7c) et la valeur du compteur Cpt (figure 7d) commence à croître. A l'instant t11, le seuil Scpt du compteur est dépassé et un signal 35 d'inhibition prend une valeur 36 (figure 7e). Lorsque le courant de test a été injecté à l'instant t10, les fonctions de protection ont commencé leurs temporisations. Un signal TPT représentatif de la temporisation ou de l'échauffement en protection terre (figure 7f) dépasse un seuil 37 de demande de déclenchement à un instant t12 postérieur à t11. Cependant le déclenchement ne sera pas produit, la valeur 36 du signal d'inhibition 35 bloquant les effets de la demande de déclenchement en protection terre. Un signal TLR, représentatif de la temporisation ou de l'échauffement long retard (figure 7g), atteint un seuil 38 de demande de déclenchement à l'instant t13. Le signal de déclenchement 20 (figure 7h) prend la valeur 39 de validation du déclenchement et commande l'ouverture du disjoncteur.

Si un courant de test négatif est injecté à l'instant t20 (figure 8a). La valeur absolue |I| de ce courant est supérieure aux seuils de déclenchement 33 pour le long retard ou court retard et 34 pour la protection terre (figure 8b). La valeur du signe SIN est bloquée à une valeur VN (figure 8C) et la valeur du compteur reste à une valeur inférieure au seuil Scpt (figure 8d). Le signal d'inhibition 35 n'est pas activé (figure 8e). Le signal de temporisation TPT de la protection terre (figure 8f) augmente puis dépasse le seuil de demande de déclenchement 37 à l'instant t21. Comme le signal d'inhibition 35 n'est pas actif, le déclenchement est possible et le signal 20 prend la valeur 39 pour la commande d'ouverture du disjoncteur (figure 8h). Le signal TLR de temporisation de la fonction long retard (figure 8g) atteint le seuil 38 de demande de déclenchement à l'instant t22 après l'instant t21 de déclenchement en protection terre.

Dans le mode de réalisation de la figure 6, la détection de la présence d'un courant test est réalisée par un compteur Cpt qui est incrémenté ou remis à zéro. Pour diminuer la sensibilité à certaines perturbations les variations peuvent être effectuées par une augmentation lente et une diminution rapide de la valeur du compteur.

Dans le mode de réalisation décrit ci-dessus, la détection de la permanence et de la valeur du signe est effectuée sur la voie de mesure du courant de neutre, mais une quelconque autre voie pourrait être utilisée. Les bornes du test P1 et P2 sont respectivement connectées à deux premières extrémités de deux capteurs respectivement T1 et TN, cependant le générateur de test peut être connecté à d'autres extrémités et d'autres capteurs. Dans d'autres modes de réalisation les bornes de test P1 et P2 peuvent être connectées directement à des éléments supplémentaires du circuit de redressement et comporter des redresseurs spécifiques à la voie de test. Le courant test est alors appliqué directement aux circuits 8 et 10. L'invention peut s'appliquer à d'autres types de disjoncteurs, notamment ceux qui comportent des transformateurs, ou capteurs de courant, pour le neutre ou la protection terre, à l'extérieur du boîtier du disjoncteur. Si un capteur extérieur est sur la ligne de neutre, l'enroulement secondaire est connecté au circuit de détection et de redressement 3 intérieur et le fonctionnement est identique à celui décrit plus haut. Dans le cas où un capteur extérieur de courant de défaut de terre a son secondaire connecté au circuit de détection et de redressement, l'invention s'applique de la même manière. Le courant de test est alors ajouté au courant du transformateur de courant de défaut terre et des moyens permettront de détecter la présence d'un courant de test et de différencier suivant le sens du courant si le test est destiné à la fonction protection terre. La valeur du courant de défaut terre est lue directement sur la voie de terre à travers le circuit de détection et de redressement et n'est pas déterminé en fonction des valeurs absolues des courants de phases et de leurs signes. Cependant, comme dans les modes de réalisation précédents, un signal de signe servira à la détection du courant de test.

## Revendications

1. Déclencheur électronique pour disjoncteur électrique multipolaire de protection d'un réseau électrique comportant :
- un capteur de courant par pôle fournissant un courant secondaire représentatif d'un courant parcourant un conducteur associé du réseau (1) protégé par le disjoncteur,
- des moyens (P1, P2) d'entrée d'un courant de test ,
- un circuit (3) de détection et de redressement, auquel sont appliqués les courants secondaires et le courant de test, fournissant des signaux représentatifs des courants parcourant les conducteurs à protéger et du courant de test,
- un ensemble électronique de traitement (4) recevant les signaux fournis par le circuit de détection et de redressement et délivrant un ordre de déclenchement, avec ou sans retard, lorsque les courants parcourant les conducteurs à protéger, un courant homopolaire ou un courant de test dépassent des seuils prédéterminés,
déclencheur électronique caractérisé en ce que l'ensemble électronique de traitement (4) comporte des moyens (14; 25, 31) de détection d'un courant de test permettant de déterminer que le courant de test garde une polarité prédéterminée pendant un temps supérieur à la période du réseau électrique à protéger.

2. Déclencheur selon la revendication 1 caractérisé en ce que les moyens (P1, P2) d'entrée du courant test sont connectés au circuit (3) de détection et de redressement de manière à fournir en sortie du circuit (3) de détection et de redressement au moins un signal de somme (ITN) représentatif de la somme du courant test et du courant fourni par un desdits capteurs ou par un capteur homopolaire.

3. Déclencheur selon l'une des revendications 1 et 2 caractérisé en ce que l'ensemble de traitement (4) comporte des moyens (10) de détermination du signe (SIN) du signal de somme (ITN) ou du courant test.

4. Déclencheur selon la revendication 3 caractérisé en ce que l'ensemble de traitement (4) comporte des moyens (14; 25, 31) de détermination du temps pendant lequel ledit signe conserve une valeur prédéterminée (VP), et des moyens de comparaison de ce temps à une durée prédéterminée (Scpt).

5. Déclencheur selon la revendication 4 caractérisé en ce que l'ensemble de traitement (4) comporte des moyens de réalisation d'une fonction de protection terre (13, 27) et des moyens d'inhibition (22, 28) de ladite fonction de protection terre.

6. Déclencheur selon l'une des revendications 1 à 5 caractérisé en ce que les moyens d'entrée du courant de test comportent une première borne (P1), connectée à une sortie d'un enroulement secondaire d'un premier capteur de courant et à une première entrée du circuit (3) de détection et de redressement, et une seconde borne (P2) connectée à une sortie d'un enroulement secondaire d'un second capteur de courant et à une seconde entrée du circuit (3) de détection et de redressement.

7. Déclencheur selon l'une quelconque des revendications 1 à 6, caractérisé en ce que le circuit (3) de détection et de redressement comporte un groupe de diodes (11a, 12a, 13a, 14a) associées à chaque capteur de courant , connectées en pont redresseur, une première (11a) et une seconde (12a) diode reliées par leurs cathodes à un point positif (Vp) d'une alimentation, une troisième (13a) et une quatrième (14a) diodes connectées par leurs anodes à une résistance de mesure (R1), la première (11a) et la troisième (13a) diodes étant connectées en série et leur point commun étant connecté à une première sortie du capteur de courant associé (T1), la deuxième (12a) et la quatrième (14a) diodes étant connectées en série et leur point commun étant connecté à une seconde sortie du capteur de courant associé (T1), une (Pa) des deux sorties du capteur de courant étant reliée à des moyens (10) de détection du signe du courant circulant dans ledit capteur, lesdits moyens de détection fournissant en sortie une première valeur (VP) si le signe du courant est positif ou une seconde valeur (VN) si le signe du courant est négatif, le point (Aa) commun entre la troisième diode (13a), la quatrième diode (14a) et la résistance de mesure (R1) fournissant un signal représentatif de la valeur absolue du courant.

8. Déclencheur selon l'une quelconque des revendications 1 à 7 caractérisé en ce que l'ensemble de traitement (4) comporte des moyens de correction (16) connectés entre le circuit (3) de détection et de redressement, et des circuits (18, 19) de réalisation de fonctions de déclenchement, lesdits moyens de correction étant connectés à une sortie (23) des moyens (14) de détection d'un courant de test fournissant un signal représentatif de la présence d'un courant test.

9. Déclencheur selon l'une quelconque des revendications 1 à 8 caractérisé en ce que le courant test est un courant continu.

## Patentansprüche

1. Elektronischer Auslöser für einen Mehrpol-Leistungsschalter zum Schutz eines elektrischen Leitungsnetzes, der
- einen Stromwandler für jeden Pol, welcher einen Sekundärstrom liefert, der einen, einen zugeordneten Leiter des durch den Leistungsschalter zu schützenden Netzes (1) durchfließenden Strom abbildet,
- Mittel (P1, P2) zur Injizierung eines Prüfstroms,
- eine Erfassungs- und Gleichrichterschaltung (3), die mit den Sekundärströmen sowie mit dem Prüfstrom beaufschlagt wird und Signale liefert, die die zu schützenden Leiter durchfließenden Ströme sowie den Prüfstrom abbilden, sowie
- eine elektronische Verarbeitungsschaltung (4) umfaßt, die mit den von der Erfassungs- und Gleichrichterschaltung ausgegebenen Signalen beaufschlagt wird und einen Auslösebefehl zur verzögerten oder unverzögerten Auslösung liefert, wenn die in den zu schützenden Leitern fließenden Ströme, ein Erdschlußstrom oder ein Prüfstrom bestimmte Ansprechwerte überschreiten,
dadurch gekennzeichnet, daß die elektronische Verarbeitungsschaltung (4) Mittel (14; 25, 31) zur Erfassung eines Prüfstroms umfaßt, mit denen es möglich ist zu bestimmen, daß der Prüfstrom über eine die Periodendauer des zu schützenden elektrischen Leitungsnetzes überschreitende Zeitspanne eine bestimmte Polarität beibehält.

2. Auslöser nach Anspruch 1, dadurch gekennzeichnet, daß die Mittel (P1, P2) zur Injizierung des Prüfstroms an die Erfassungs- und Gleichrichterschaltung (3) angeschlossen sind, so daß am Ausgang der Erfassungs- und Gleichrichterschaltung (3) mindestens ein Summensignal (ITN) bereitgestellt wird, das die Summe aus dem Prüfstrom und dem durch einen der genannten Stromwandler bzw. einen Fehlerstrom-Schutzwandler gelieferten Strom abbildet.

3. Auslöser nach Anspruch 1 und 2, dadurch gekennzeichnet, daß die Verarbeitungsschaltung (4) Mittel (10) zur Bestimmung der Polarität (SIN) des Summen- oder Prüfstromsignals umfaßt.

4. Auslöser nach Anspruch 3, dadurch gekennzeichnet, daß die Verarbeitungsschaltung (4) Mittel (14; 25, 31) zur Bestimmung der Zeitspanne, über die die genannte Polarität einen bestimmten Wert (VP) beibehält, sowie Mittel zum Vergleich dieser Zeitspanne mit einer bestimmten Zeitdauer (Scpt) umfaßt.

5. Auslöser nach Anspruch 4, dadurch gekennzeichnet, daß die Verarbeitungsschaltung (4) Mittel zur Bereitstellung einer Erdschluß-Schutzfunktion (13, 27) sowie Mittel (22, 28) zur Unterdrückung der genannten Erdschluß-Schutzfunktion umfaßt.

6. Auslöser nach einem der Ansprüche 1 bis 5, dadurch gekennzeichnet, daß die Mittel zur Injizierung des Prüfstroms eine an einen Ausgang einer Sekundärwicklung eines ersten Stromwandlers sowie an einen ersten Eingang der Erfassungs- und Gleichrichterschaltung (3) angeschlossene erste Klemme (P1) und eine an einen Ausgang einer Sekundärwicklung eines zweiten Stromwandlers sowie an einen zweiten Eingang der Erfassungs- und Gleichrichterschaltung (3) angeschlossene zweite Klemme (P2) umfassen.

7. Auslöser nach einem der Ansprüche 1 bis 6, dadurch gekennzeichnet, daß die Erfassungs- und Gleichrichterschaltung (3) eine Schaltung mit jedem Stromwandler zugeordneten Dioden (11a, 12a, 13a, 14a) umfaßt, die zu einer Gleichrichterbrücke zusammengeschaltet sind, wobei eine erste (11a) sowie eine zweite Diode (12a) über ihre Kathoden an ein positives Potential (Vp) einer Versorgungsleitung und eine dritte (13a) sowie eine vierte Diode (14a) über ihre Anoden an einen Meßwiderstand (R1) angeschlossen sind, die erste (11a) und dritte (13a) Diode in Reihe geschaltet sind und ihr gemeinsamer Anschlußpunkt an einen ersten Ausgang des zugeordneten Stromwandlers (T1) angeschlossen sind, die zweite (12a) und vierte (14a) Dioden in Reihe geschaltet sind und ihr gemeinsamer Anschlußpunkt an einen zweiten Ausgang des zugeordneten Stromwandels (T1) angeschlossen sind, einer (Pa) der beiden Ausgänge des Stromwandlers an Mittel (10) zur Erfassung der Polarität des den genannten Stromwandler durchfließenden Stroms angeschlossen ist, die genannten Polaritätserfassungsmittel bei positiver Polarität des Stroms einen ersten Wert (VP) und bei negativer Polarität des Stroms einen zweiten Wert (VN) am Ausgang bereitstellen und der gemeinsame Anschlußpunkt (Aa) zwischen der dritten Diode (13a), der vierten Diode (14a) und dem Meßwiderstand (R1) ein Signal liefert, das den Absolutwert des Stroms abbildet.

8. Auslöser nach einem der Ansprüche 1 bis 7, dadurch gekennzeichnet, daß die Verarbeitungsschaltung (4) zwischen die Erfassungs- und Gleichrichterschaltung (3) sowie Schaltungen (18, 19) zur Bereitstellung der Auslösefunktionen geschaltete Korrekturmittel (16) umfaßt, wobei die genannten Korrekturmittel an einen Ausgang (23) der Mittel (14) zur Erfassung eines Prüfstroms angeschlossen sind, die ein das Vorhandensein eines Prüfstroms abbildendes Signal liefern.

9. Auslöser nach einem der Ansprüche 1 bis 8, dadurch gekennzeichnet, daß der Prüfstrom ein Gleichstrom ist.

## Claims

1. An electronic trip device for a multipole electrical circuit breaker protecting an electrical power system comprising :
- a current sensor per pole supplying a secondary current representative of a current flowing in an associated conductor of the power system (1) protected by the circuit breaker,
- test current input means (P1, P2),
- a detection and rectifying circuit (3), to which the secondary currents and test current are applied, supplying signals representative of the currents flowing in the conductors to be protected and of the test current,
- an electronic processing unit (4) receiving the signals supplied by the detection and rectifying circuit and delivering a tripping order, with or without a time delay, when the currents flowing in the conductors to be protected, an earth fault current or a test current exceed preset thresholds,
an electronic trip device characterized in that the electronic processing unit (4) comprises means (14; 25, 31) for detecting a test current whereby it is possible to determine that the test current keeps a predetermined polarity during a time greater than the period of the electrical power system to be protected.

2. The trip device according to claim 1, characterized in that the means (P1, P2) for applying the test current are connected to the detection and rectifying circuit (3) so as to supply on output of the detection and rectifying circuit (3) at least one summed signal (ITN) representative of the sum of the test current and of the current supplied by one of said sensors or by an earth fault sensor.

3. The trip device according to one of the claims 1 and 2, characterized in that the processing unit (4) comprises means (10) for determining the sign (SIN) of the summed signal (ITN) or of the test current.

4. The trip device according to claim 3, characterized in that the processing unit (4) comprises means (14; 25, 31) for determining the time during which said sign keeps a preset value (VP), and means for comparing this time with a preset duration (Scpt).

5. The trip device according to claim 4, characterized in that the processing unit (4) comprises means for performing an earth protection function (13, 27) and means (22, 28) for inhibiting said earth protection function.

6. The trip device according to one of the claims 1 to 5, characterized in that the means for applying the test current comprise a first terminal (P1), connected to an output of a secondary winding of a first current sensor and to a first input of the detection and rectifying circuit (3), and a second terminal (P2), connected to an output of a secondary winding of a second current sensor and to a second input of the detection and rectifying circuit (3).

7. The trip device according to one of the claims 1 to 6, characterized in that the detection and rectifying circuit (3) comprises a group of diodes (11a, 12a, 13a, 14a) associated to each current sensor, connected as a rectifier bridge, a first (11a) and a second (12a) diode connected by their cathodes to a positive power supply point (Vp), a third (13a) and a fourth (14a) diode connected by their anodes to a measuring resistance (R1), the first (11a) and third (13a) diodes being connected in series and their common point being connected to a first output of the associated current sensor (T1), the second (12a) and fourth (14a) diodes being connected in series and their common point being connected to a second output of the associated current sensor (T1), one (Pa) of the two outputs of the current sensor being connected to means (10) for detecting the sign of the current flowing in said sensor, said means for detecting supplying on output a first value (VP) if the current sign is positive or a second value (VN) if the current sign is negative, the common point (Aa) between the third diode (13a), the fourth diode (14a) and the measuring resistance (R1) supplying a signal representative of the absolute value of the current.

8. The trip device according to one of the claims 1 to 7, characterized in that the processing unit (4) comprises correction means (16) connected between the detection and rectifying circuit (3), and circuits (18, 19) for performing tripping functions, said correction means being connected to an output (23) of the detection means (14) of a test current supplying a signal representative of the presence of a test current.

9. The trip device according to one of the claims 1 to 8, characterized in that the test current is a DC current.
